# EUROPEAN PATENT SPECIFICATION

(11) **EP 1 860 822 B1**
(45) Date of publication and mention of the grant of the patent: **28.06.2017**
(21) Application number: 06270052.1
(22) Date of filing: 23.05.2006
(51) Int. Cl.: H04L 12/24, H04N 7/14

(54) **Creating groups of communications devices**
Gruppenerzeugung für Kommunikationsgeräte
Création de groupes pour appareils de communication

(43) Date of publication of application: 28.11.2007
(73) Proprietor: Microsoft Technology Licensing, LLC, Redmond, WA 98052 (US)
(72) Inventor: Siegemund, Frank Mictosoft Eur. Microsoft Innovation Center, 52072 Aachen (DE)
(74) Representative: Free, Rachel Alder

(56) References cited:
- EP-A- 0 574 138
- EP-A2- 0 641 141
- EP-A2- 1 387 560
- WO-A-2005/120064

## Description

### TECHNICAL FIELD

This description relates generally to the creation of groups of communications devices which intend to share information. It is particularly related to, but in no way limited to, creation of groups of mobile communications devices on an ad-hoc basis.

### BACKGROUND

In today's seamlessly connected world, there are an increasing number of applications that involve multiple users. Examples of such applications are P2P (peer-to-peer) applications, which allow groups of people to share information such as pictures and text documents, and CSCW (computer supported cooperative working) applications, which support groups of users in working together in order to solve a specific task. All of these applications require as a precondition that it is possible to form the groups of users those applications build upon.

The problem of group creation becomes especially difficult in a mobile setting, i.e., when users are mobile and need to form groups that are often valid for only short time intervals by using mobile communications devices such as mobile telephones, personal digital assistants (PDAs), or laptop computers. Creating these groups of users can be achieved by pre-arrangement, for example by sending email addresses of the various users to group members or by sending a web address to each group member to enable them to access a shared web service.

In the case where pre-arrangement is not possible, for example, because of time constraints, lack of information, inability to plan in advance etc. it is typically necessary for user's wishing to invite others to join the group to transfer information about the group to the invitee. It is required to provide a simple, secure, robust, and effective manner to achieve this. Existing methods which involve the use of technologies such as Bluetooth^{tm}, Wireless Local Area Networks (WLAN) or Infrared Data Association (IrDA) technology are often not user friendly, especially for users unfamiliar with particular communications user interfaces. Manual methods, such as entering the network address of a node or application to which a device wishes to connect into that device using, for example, a keypad or the like are error prone, time consuming and have weak security.

Groups of users who wish to share information often use mobile devices such as mobile telephones, personal digital assistants (PDAs), notebooks, or the like. However, the creation and management of such groups is neither as secure or convenient as is desirable. In addition, firewalls and network address translators (NATs) often create obstacles to easy formation of such groups, especially in mobile environments.

A communications device generally provides a range of applications. For example, a mobile telephone may comprise a call management application, a Short Message Service (SMS) application, a clock application, a Bluetooth^{tm} application, a camera application and the like. In order for a user of the mobile telephone to join an ad-hoc group of communications devices, the user will generally require the use of a specific, peer group management application. This application is likely to be used only rarely and this means that users will not readily become familiar with the application. The user may not be able to recall how to start the application, which menus to use to access the application, how to perform management operations using the application and the like. This will discourage him or her from using the application.

In addition, the security of such groups could be improved. For example, if an ad-hoc group of communications devices is created between devices via a WLAN or via Bluetooth^{tm}, any device within range of the signal can join the group. Such groups can be made more secure by requiring, for example, a code or password to be entered. However, this requires the communication of the password prospective nodes before a node can join a group.

EP 0574138 discloses a remote conferencing facility adapted to generate a common image for viewing by each of the participants such that each participant can modify the image during a conference.

EP 0641141 discloses a system for sending and receiving images, in particular in relation to caller identification.

EP 1 387 560 discloses a portable telephone which has a camera for reading a barcode. The device notifies the user when a barcode is recognized and performs a predetermined process based on the content of the recognition.

### SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

We describe methods for enabling a communications device having a camera to join a group of communications devices. Members of the group are able to share information with one another using a peer-to-peer application or work co-operatively using a computer supported cooperative work application. A user who requires to establish a group has a communications device which displays one or more visual tags. For example, a sequence of visual tags is displayed. The visual tag(s) comprise information about the group. An invitee uses a camera on an invitee communications device to receive an image of the visual tag(s) in order to join the group. The information about the group is extracted and used to robustly and securely join the group. Connectivity restrictions such as firewalls and network address translators (NATs) are reduced because the group information is passed using the visual tag(s).Different interaction mechanisms are disclosed and groups of users and their communications devices can be created on an ad-hoc basis.

We describe a method of enabling a communications device having a camera to join a group of communications devices, members of that group requiring to share information with one another. The method comprises, at the communications device requiring to join the group:
- initiating a camera application controlling the camera; and
- receiving an image of at least one visual tag via the camera the visual tag comprising information about the group.

This provides the advantage that a user is able to join a group using a camera application. Because camera applications, especially those on mobile telephones, PDAs and the like, are well known to end users this facilitates ease of use and reduces the need for training. There is no need to input information manually, or use another communications method such as Bluetooth to obtain the information about the group. In addition, by using a visual tag to transfer the group information, some degree of control and security is retained over the information because to receive the image the camera must be positioned relatively close to the source of the visual tag. No pre-arrangement is necessary such that the user is able to join the group on an ad-hoc basis. The group can be used to share information, for example using a peer-to-peer application or a CSCW application. Capturing one or more visual tags enables users to robustly join the user groups, because it allows an integrated application to deal with the connectivity restrictions (NATs and firewalls) predominant in the mobile setting.

We also describe a method of enabling a communications device to create a group of communications devices, members of that group requiring to share information with one another using a peer-to-peer application. The method comprising, at a communications device which is already a member of the group: accessing at least one visual tag comprising information about the group; and displaying the visual tag.

This method enables a user to invite another user to join a group in a simple and effective manner. No pre-arrangement is required such that the invitation can be issued on an ad-hoc basis.

We also describe a communications device for joining a group of communications devices, members of that group intending to share information with one another using a peer-to-peer application, the communications device comprising:
- a camera and a camera application arranged to control the camera;
- means for identifying and extracting information about the group from a visual tag received via the camera; and
- a software application arranged to use the group information in order to share information between the group members.

We describe a communications device comprising:
- means for automatically generating at least one visual tag, comprising encrypted information about a group of communications devices, members of that group intending to share information with one another; and
- means for displaying the visual tag.

We describe a visual tag comprising encrypted information about a group of communications devices, members of that group requiring to share information with one another.

Referring now to the methods at a communications device requiring to join the group:
Preferably the method further comprises decoding the visual tag in order to obtain the information about the group.

In some embodiments the method further comprises:
- storing the image at the communications device; and
- initiating a software application at the communications device in order to identify, extract and use the group information in the stored image.

This provides the advantage that the functionality required to identify, extract and optionally also decode the group information from the visual tag(s) can be provided integral with the peer-to-peer application. For example, the users need only the normal camera application, which is very familiar and easy to locate, to capture the information for joining a group. In some embodiments, the users actually join the group only later when they actually execute the application that takes advantage of the peer group. Such a delayed join aims at simplifying the join from a user's perspective.

Preferably the group information comprises one or more of: an identifier of a peer-to-peer application the group is associated with, a management operation, identifiers of one or more group members.

Preferably the images are captured from any of: a projector display; and a display of another communications device in the group.

In some embodiments the method further comprises obtaining an identifier of the peer-to-peer application from the group information and automatically downloading the identified peer-to-peer application from another entity.

Referring now to examples where a communications device invites another to join the group:

Preferably the information about the group is encrypted in the visual tag.

Preferably the step of accessing the visual tag comprises generating the visual tag.

Preferably the step of generating the visual tag comprises encrypting the group information.

Referring now to examples of a communications device which requires to join the group:
Preferably the means for identifying and extracting comprises a plug-in to the camera application.

In some embodiments the means for identifying and extracting is at least partly integral with the peer-to-peer application.

Referring now to examples of a communications device which is able to invite others to join the group:
Preferably the information about the group comprises any of: an identifier of the peer-to-peer or CSCW application associated with the group, a management operation, and identifiers of one or more group members.

Referring now to the examples of the visual tag:
Preferably the encrypted information comprises an identifier of the peer-to-peer application or CSCW application, a management operation and identifiers of one or more group members.

Thus, in some examples a sequence of visual tags is provided each comprising information about the total number of tags in the sequence and, for each tag, an indication of its place in the sequence.

The invention also encompasses a computer program comprising computer program code means adapted to perform any of the methods mentioned above when said program is run on a computer.

For example, the computer program is embodied on a computer readable medium.

The methods may be performed by software in machine readable form on a storage medium. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions, (and therefore the software essentially defines the functions of the register, and can therefore be termed a register, even before it is combined with its standard hardware). For similar reasons, it is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a schematic diagram of a group of mobile communications devices;
FIG. 2 is a schematic diagram of a member of a group of communications devices;
FIGs. 3a and 3b are schematic diagrams of a device not yet a member of a group;
FIG. 4 is a schematic diagram of a member of a group of communications devices showing a visual tag; and
FIG. 5 is a flow chart showing steps of example methods of enabling a communications device to join a group;

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

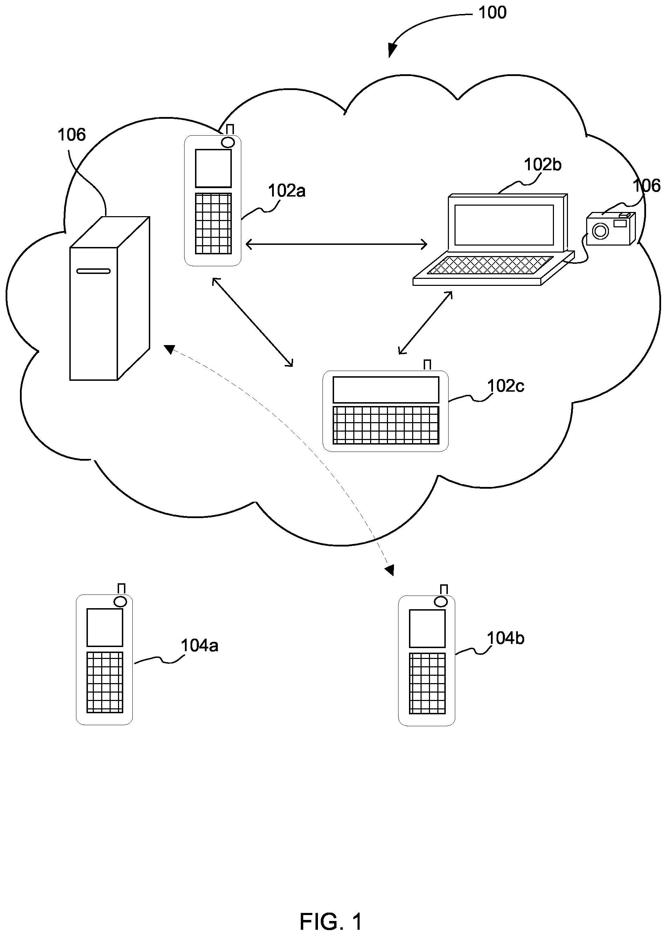

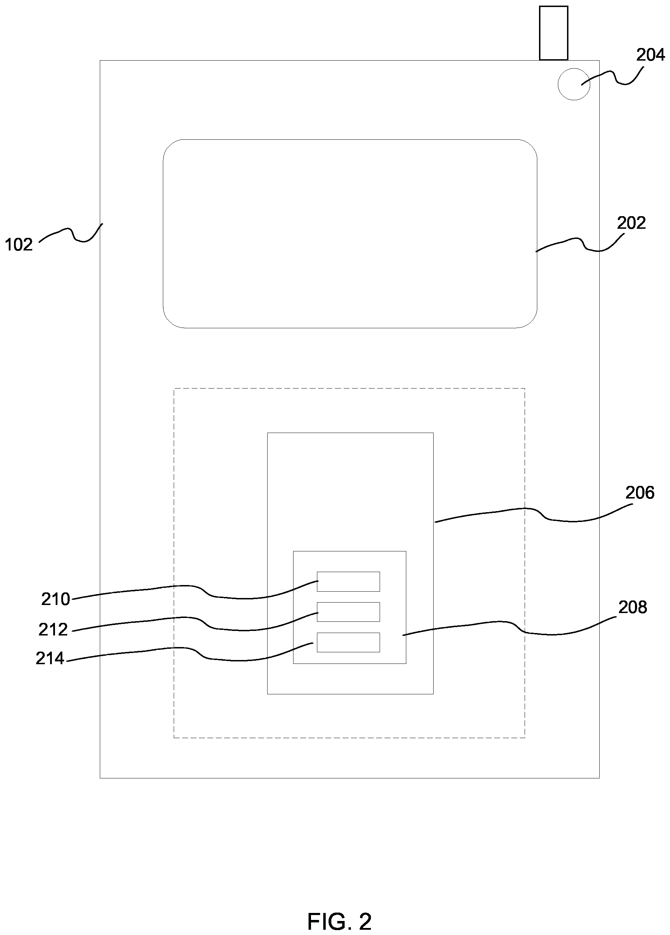

FIG. 1 shows a plurality of mobile electronic processing devices, whose users participate in a certain user group. The cloud of user devices - in the following referred to as the peer device group 100 comprises a plurality of member nodes 102 each of which is a mobile electronic processing device, in this example a mobile camera phone 102a, a notebook computer 102b with an attached digital camera 106 and a Personal Digital Assistant 102c, which incorporates a digital camera. It can also be possible that a mobile phone is connected to a laptop computer or stationary computer and servers as a camera. The connection can be of any suitable type such as wifi, Bluetooth ™ or in the future, wireless USB. For a single user multiple devices can participate in the peer device group 100 that are used to access the application associated to the user group. The users of these mobile electronic processing devices form a user group that is associated to an application (e.g., a peer-to-peer application for sharing pictures or other information, or a CSCW application that supports the users in collaboratively working on a certain task) running on these devices. The devices 102a, 102b, 102c form a peer device group 100 in the sense that they have access to a common peer-to-peer or CSCW application which at least provides functionality to share information between group members and are able to communicate with one another over a communications network of any suitable type. The member nodes 102 are able to share information, for example in the form of text, pictures or status information relating to another member node 102 over the network and the common components of the member nodes 102 are described in greater detail with reference to FIG. 2 below.

It will be appreciated that a peer device group 100 could comprise more or fewer member nodes 102 but that a relatively small number is described herein for the sake of clarity.

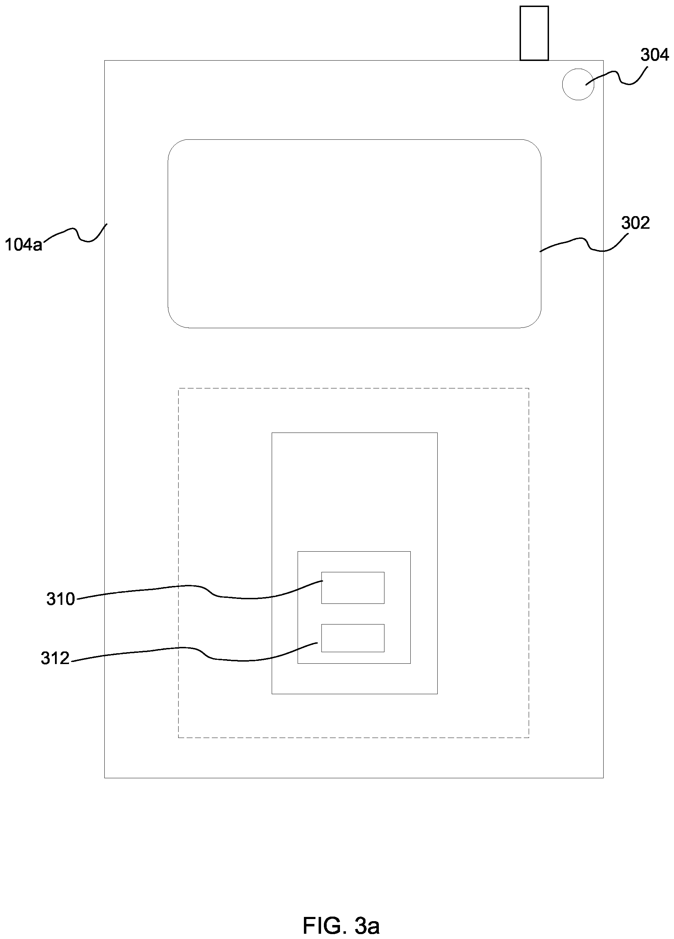

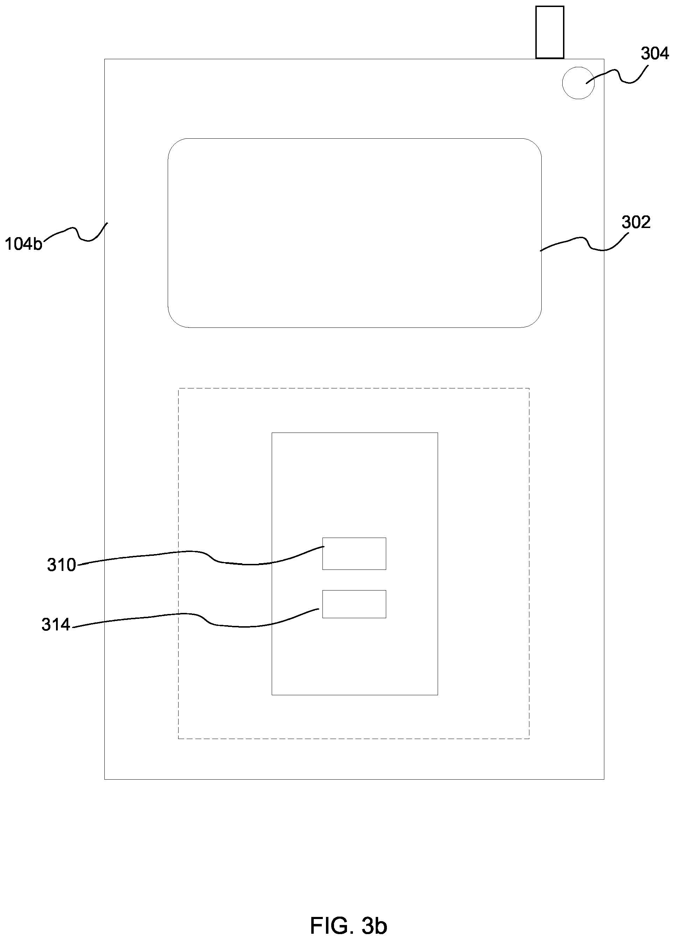

FIG. 1 also shows two candidate nodes 104. The term 'candidate node' should be understood to mean a node which is currently outside the peer device group 100, but which requires to join the group 100. If the user currently using or owning the device is not already in the corresponding group, the addition of this device to the peer device group implies that this user joins the associated user group. In the example of the FIG. 1, the candidate nodes 104 are both mobile camera phones 104a, 104b and comprise a group-ready candidate node 104a and a basic candidate node 104b. As will be discussed further below with reference to Figures 3a and 3b, the main difference between the group-ready candidate node 104a and the basic candidate node 104b is that the group-ready candidate node 104a is equipped with all necessary applications to allow it to join within the peer group 100 and perform as a member node 102, whereas the basic candidate node 104b does not.

Also shown in FIG. 1 is a server 106. The server 106 is capable of receiving requests for data from the candidate nodes 104 and from the member nodes 102. The server node is not essential.

An example of a member node 102 is shown schematically in FIG. 2. In this example, the member node 102 comprises a display means, provided in this example by a screen 202, capable of displaying a two dimensional visual tag and a digital camera 204, capable of capturing an image. In the case that the member node 102 is a master node it is not essential that a digital camera 204 is provided.

The member node 102 also comprises processing circuitry 206 capable of controlling the behavior of the member node 102 and of receiving inputs both from a user of the member node 102 and from the network. The processing circuitry 206 comprises a memory 208, arranged to hold applications. It will be appreciated that the term 'application' as used herein refers to portions of software, dedicated hardware, firmware or the like which are arranged to provide functions of the node 102, for example, if the node 102 is a mobile phone, then it can comprise a call management application, a Short Message Service (SMS) application, a clock application, a Bluetooth application, etc. In this example of the member node 102, the memory 208 holds (amongst other optional, known, applications which will not be described in detail herein):
a. a camera application 210, arranged to control the functions of the camera 204, including operation of the camera 204 in a 'viewfinder' mode, in which the screen 202 shows an image of the area in front of the camera 204 which would form the picture if the user requested image capture (where image capture be still images or videos) at that moment, thereby allowing the screen 202 to act like the 'viewfinder' of the camera 204, allowing the user to select the image that he or she would like to capture,
b. a peer group management application 212, arranged to control the management of the member node 102 within the peer group 100 and to carry out management functions such as joining a group, leaving a group, etc., and
c. optionally, a peer group master application 214, arranged to control the member node 102 to act as a 'master', as is described in greater detail below.

As is shown in FIGs. 3a and 3b, the example candidate nodes 104 each comprise a screen 302, capable of displaying the camera application and a digital camera 304, capable of capturing an image.

The example candidate nodes 104 also comprise processing circuitry 206 capable of controlling the behavior of the candidate nodes 104 and of receiving inputs both from a user of the candidate nodes 104 and from a communications network of any suitable type. The processing circuitry 206 comprises a memory 208, arranged to hold applications. One such application is the camera application 310 which is arranged to control the functions of the camera 304, including in this example, operation of the camera 304 in a 'viewfinder' mode.

The group-ready candidate node 104a further comprises a peer group management application 312, arranged to control the management of the group-ready candidate node 104a within the peer group 100 and to carry out management functions such as joining a group, leaving a group, etc. The peer group management application 312 is further arranged to automatically recognize when an image received by the camera (e.g. by being captured or received in viewfinder mode) 304 contains a visual tag 400 and to decrypt the tag 400. The peer group management application preferably also recognizes a sequence of tags. i.e., it keeps track of the recently decoded tags found in a stream of images received by the camera in view-finder mode, accumulates the information transmitted in a number of single tags, and reconstructs the information contained in the tag sequence. The peer group management application 312 is preferably, but not essentially, a plug-in component to the camera application 310. The term 'plug-in' as used herein is intended to mean a hardware or software application which adds a specific capability to a pre-existing application. As a plug-in component, the peer group management application 312 is automatically called when the camera application 310 is initiated by a user of the candidate node 104a.

The basic candidate node 104b does not hold a peer group management application 312 in its memory 206. This candidate node 104b is representative of devices where the user has elected not to acquire or include a plug-in component providing a peer group management application 312 in their operating system or web browser for example, and/or of devices whose operating system will not allow plug-in components to the camera application 310. The basic candidate node 104 comprises a peer group initiation application 314.

The peer group initiation application 314 is a separate application to the camera application 310 and requires the user thereof to launch it actively in order to join the peer group 100.

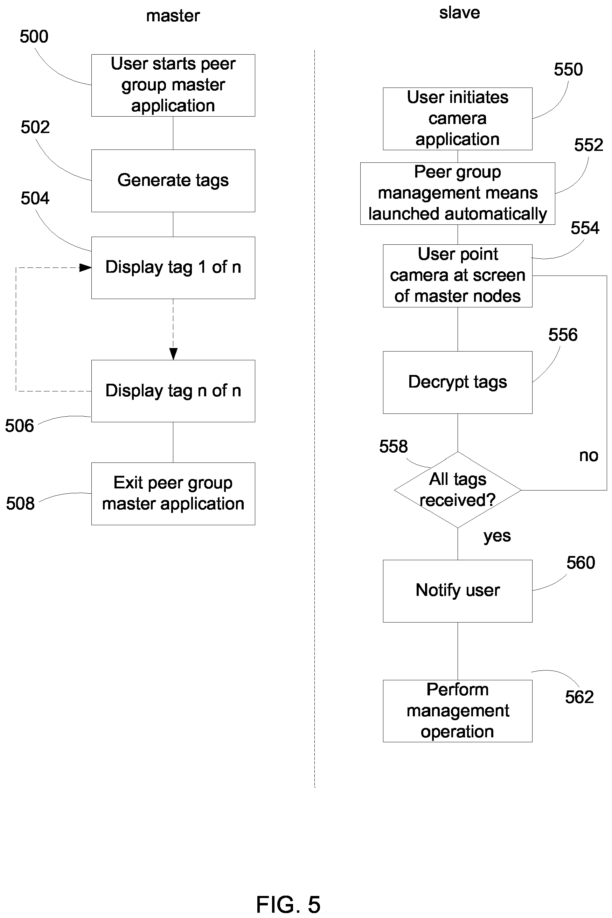

Examples of methods of carrying out a peer group management operation are now described in relation to FIG. 5. The following example operation relates to a candidate node 104 joining a peer device group 100. If the current user or owner of the device is not currently a member of the user group associated to the peer device group, this implies that this user joins the corresponding user group.

In order to join the peer group 100, a user of a candidate node 104 is able to use the camera application 310 of the candidate node 104 to acquire at least one and preferably a sequence of images containing visual tags comprising information about the group by pointing the camera of the candidate node 104 to the screen 202 of a member node 102. This requires the generation of such tags by the member node 102. In practical terms, this will generally occur by the user of the candidate node 102 asking the user of a member node 102, who is in the same physical locality as the user of the candidate node 104, to allow the candidate node 104 to join the peer group 100. This provides a security measure as permission to join the group 100 must be granted directly from a member of the group 100. In addition, physical proximity is required. If the user of the member node 104 is content to invite the user of the candidate to join the group, then the method proceeds as follows.

During this operation and in the following description, the member node 102 is acting as a 'master' node and the candidate node 104 is acting as a 'slave' node. It will however be appreciated that these roles could be performed by other devices. For example, the 'master' need not be part of the peer device group 100, particularly where the candidate node 214 is the first node to join a group 100. Alternatively, only one, or a subset of the member nodes 102 could be capable of acting as a master in a given group 100.

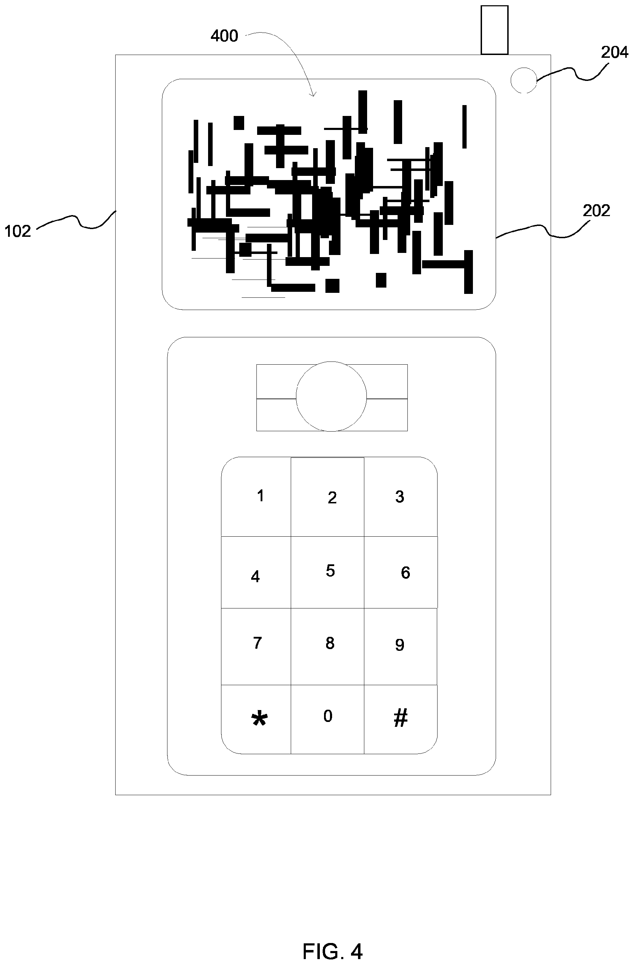

The master node 102 uses the peer group master application 214 stored in its memory 208 (step 500). The peer group master application 214 is arranged to dynamically generate at least one and preferably a series of visual tags 400 (step 502) which, in this example, comprise two-dimensional visual tags 400 such as is schematically shown in FIG. 4. The master displays a visual tag out of the sequence of tags for a certain time interval (e.g., for 0.5 or 1 second) and then displays the next tag in the sequence. Thus, a single tag can be shown multiple times. For example, if there are 3 tags in the sequence and each tag is displayed for 0.5 seconds on the master's screen, the tag sequence can be repeated after 1.5 seconds. Also, the tags do not have to be shown in a predefined sequence. The software at the slave should be able to decode the underlying information even if a tag could not be detected in the first time. Thus, the slave is able to decode the information even if tag 3 is decoded before tag 1.

In the case that a sequence of tags is used, additional information is required to be available in the tags to reassemble the information contained in the sequence of tags. Some form of segmentation and reassembly is required to distribute the information about a user group across a sequence of tags. In an example implementation, every tag contains an indication of its place in the sequence and the total number of tags in the sequence of tags to be transmitted. This can be used by the communications device wanting to join the group to reconstruct the transmitted information. Ambient lighting conditions can also prevent a tag from being correctly decoded by the device that wants to join the group. In order to deal with this, a number of error detection and correction algorithms may be used as known in the art in order to detect and correct those errors. As these mechanisms change the tag information itself, an identifier that identifies the error detection/correction mechanism used can also be included in the tags.

Each tag 400 comprises data about the group. For example, in this case, providing information about the members of the user group and data about selected members nodes 102 of the peer device group 100. Data about selected member nodes 102 can contain, for example, connectivity data (i.e. their network addresses and any other necessary data), the identity of the peer-to-peer application, data identifying the peer group management operation to be performed by a slave, which in this case is 'join the group', the total number of tags 400 in the series, the index number of that particular tag 400, and the error correction and detection algorithm used. A series of tags 400 rather than a single tag 400 is required in this example as the data capacity of visual tag 400 is limited and one visual tag 400 is not sufficient to encrypt all of the data, in particular as the connectivity data of multiple member nodes 102 is provided. However, in other embodiments, all the required data may be provided in a single tag 400. It will further be appreciated that in this example connectivity data is provided for multiple peers in the peer device group. Providing information about multiple member nodes 102 is preferable in the event that the candidate node 104 is not able to connect to a specified member node 102, or loses a connection with a specified member node 102 (for example if that node 102 leaves the group), then the candidate node 104 can join the group 100 or maintain its connection to the group 100 via another member node 102. By transmitting multiple tags more data can be transmitted between slave and master. Generally, this is necessary in order to make the procedure of joining a group more robust. This is especially important in a mobile setting. For example, firewalls and network address translators can make it impossible for certain devices to interact with each other directly. Hence, a slave might not be able to directly establish a connection to the master device using a communication protocol such as GPRS or UMTS. Thus, by transmitting data about multiple members of the group the probability for successfully joining a group is increased. If a first member of the group cannot be reached because of NATs or firewalls for example, other members of the group can be tried.

As is shown in FIG. 4, in this example, the tag 400 comprises a 2 dimensional arrangement of dispersed black squares, wherein the placement and arrangement of the squares is representative of the data described by the tag. Such a tag can be created using known 2D barcode and related technology. For example, a suitable visual tag or visual code system is described in: Rohs, M., "Real-World interaction with camera phones", In: 2nd International Symposium on Ubiquitous Computing Systems (USC 2004), Tokyo, Japan (2004) 39-48 and Rohs, M., and Gfeller, B.,: "Using camera-equipped mobile phones for interacting with real word Objects", In Ferscha, A., Hoertner, H., Kotsis, G., eds.: "Advances in Pervasive Computing", Austrian Computer Society (OCG) (2004) 265-271, and the publication "A Conceptual Framework for Camera Phone-based Location Techniques" by Michael Rohs and Philipp Zweifel "Persuasive Computing: Third International Conference, PERVASIVE 2005, Lecture Notes in Computer Science, No. 3468, Springer-Veriag, Munich, Germany May 8-13, 2005. FIG. 4 shows the tag 400 displayed on the screen of a candidate node 102 but the tag 400 could be displayed on the screens of other devices or for example projected onto a surface. It is not essential for the group information in the visual tag to be encrypted although encryption is preferred in cases where security is an issue.

In alternative examples, the tag 400 could comprise any visual representation of the data, for example a one-dimensional bar-code, text, numbers, icons, glyphs or the like.

Within the data stored in the tag 400, there is optionally provided an index number for each tag 400 along with the total number of tags 400 to which have been generated by the member node 102. Also, the tag 400 optionally contains an identifier for an error detection and correction algorithm if used. The tags 400 are repeatedly displayed in sequence on the screen 202 of the master node 102 (step 504, 506).

The subsequent procedure depends on whether the slave node is a group-ready candidate node 104a or a basic candidate node 104b.

If the slave is a group-ready candidate node 104a, then its user starts the camera application 310 on the mobile camera phone 102b (step 550). By employing the camera application 310 in viewfinder mode, the peer group management application 312 is automatically started (step 552). The user points the camera 304 at the screen 202 of the master node 102 while the tags 400 are displayed in sequence thereon (step 554).

The peer group management application 312 is capable of processing the images provided by the camera application (preferably in real-time to improve the user experience) and of recognizing when an image contains a visual tag 400. If an image is identified that contains a visual tag 400, the peer group management application 312 decrypts the tag 400 (step 556) in order to capture data providing the necessary data to allow the group-ready candidate node 104a to join the group 100.

As explained above, within the data stored in the tag 400, there is provided an index number for each tag 400 along with the total number of tags 400 to which have been generated. Once a tag 400 has been decrypted, the index of that tag 400 and the expected number of tags 400 can be known. The peer group management application 312 determines whether all of the expected tags 400 have been received (step 558) and, if so, notifies the user (step 560) of the candidate node 104, in this example by displaying text on the screen 302 thereof. In other examples, the notification could be audible, comprise a flashing light or some other notification. In the example embodiment the user operating the slave device (i.e., the user who wants to join a peer group) sees if a tag is successfully detected and decoded. This is achieved in any suitable way, for example, by emphasizing the tag in a different color or by drawing a rectangle around it in the camera's view-finder application.

If all the tags 400 have not been received, then the user continues to point the camera 304 at the screen 202 of the member node 102 until notification is received.

Once all the tags 400 have been received and decrypted, the candidate node 104b has sufficient data to join the group 100 and in particular data about a plurality of member nodes 102 of the group 100, including connectivity data allowing a connection to be made thereto. The data also preferably includes the identity of the peer-to-peer application (i.e. the application managing the group 100) and preferably data identifying the peer group management operation to be performed by the candidate node 104a, which in this case is 'join the group'.

The peer group management operation is performed in step 562. The master member node 102 is notified as a result of the candidate node 102 successfully joining the group 100, and the user thereof exits the peer group master application 214 in step 508. Alternatively, the user of the master member node 102 could respond to the notification issued to the candidate node and exit the peer group master application 214 when that notification is received.

If the slave is a basic candidate node 104b, then for example, the camera application 310 is used to 'take a picture' or to capture a video of the tags 400 and the resulting image files or the resulting video file is stored in its memory. The peer group initiation application 314 of the basic candidate node 104b is then called, either soon after the picture is taken or at a later time. This application is arranged to search through images and videos stored on the basic candidate node 104b and to identify whether any such image contains a tag 400 or a sequence thereof.

If a tag 400 is identified, the peer group initiation application 314 is arranged to decrypt the tag 400 to capture data providing information on where the application that makes use of this peer group can be obtained. In this example, the actual application 312 that makes use of the user group 312 is stored on a device that is connected to the network by means of a reliable highspeed Internet connection, in the following referred to as a server 106. The tag in some embodiments therefore comprises data providing the location of the server 106, allowing the candidate node 104b to connect to the server 106, and find the location of the application making use of the peer group on the server 106. In addition, the tag preferably also comprises the identity of the actual application that makes use of the data identifying the peer group management operation to be performed by a slave, which in this case is 'join the group', the total number of tags 400 in the series and the index number of that particular tag.

The basic candidate node 104b connects to the server 106 and downloads the peer-to-peer or CSCW application after the node has joined the peer group.. The basic candidate node 104b is arranged to execute the application in a 'sandbox' environment within its processing circuitry.

As will be appreciated by the person skilled in the art, the term 'sandbox' refers to a security measure that restricts the access to memory and operating system resources by an application in order to prevent damage from applications with malicious intent, such as worms, Trojan horses or the like. Providing a sandbox allows a user to run a downloaded application safely.

In this example, the 'sandbox' is provided by running the peer-to-peer or CSCW application within the .NET Compact Framework. A Java Virtual Machine provides another example of a sandboxed environment.

Once the management operation of joining the group has been completed, then the candidate nodes 104 become part of the peer group (step 502).

Other management operations may be carried out in a similar fashion. Such management operations may comprise, for example, leaving the group 100, exchanging data within the group 100, sharing applications within the group 100, and the like.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

In some embodiments a method of creating and managing an ad-hoc peer group involves:
▪ generating a sequence of tags comprising encrypted data providing an identifier for a peer-to-peer application, a peer group management operation to be carried out and the identity of at least one peer within the ad-hoc peer group,
▪ displaying the visual tag using a first electronic processing device,
▪ capturing the image of the tag using a second electronic processing device, and
▪ decrypting the data represented by the sequence of tags using the second device.

The method may further comprise carrying out the management operation. This step may be carried out using the second electronic processing device.

Where multiple tags are generated, the method may further comprise generating an index number for each of the multiple tags and including the index number in the encrypted data. This provides a mechanism for the second device to determine whether a particular tag has been previously decrypted.

The method may also comprise including the total number of tags generated in the encrypted data. This provides a mechanism for the second device to determine whether all of the tags have been received.

In embodiments where multiple tags are generated, the method may further comprise displaying each of the tags in succession for a predetermined period of time. The method may alternatively or additionally comprise repeatedly displaying the tags. This provides successive opportunities for the second device to capture the image of each tag.

In an embodiment we provide a mobile electronic processing device comprising a camera and processing circuitry, wherein the processing circuitry comprise a camera application arranged to control the functions of the camera and a peer group management application which is arranged to decrypt information provided in the form of a sequence of images of visual tags acquired by the camera and to carry out network management operations when the device is part of a peer-to-peer network or participates in a CSCW application.

In one embodiment, the peer group management application is provided as a plug-in component to the camera application. This is advantageous as the peer group management application will thereby be called whenever the camera is used and will not therefore require a user to launch it separately.

In other embodiments, the peer group management application is provided together with the actual application making use of the user group in a sandboxed environment. This is advantageous as it allows the application to be run without compromising the security of the device.

Preferably, the peer group management application is arranged to determine whether a particular tag is one of a series of tags and, if so, to decrypt information from each of the tags in the series.

In one embodiment, the camera has a viewfinder mode, in which images may be acquired without being stored. This is advantageous for a user, as the tags could be acquired without the need for a user input to take a picture or to record a video. Furthermore, a user can be given direct visual feedback in real time when a tag is detected. In order to achieve such a behavior the images provided by the viewfinder mode of the camera are directly processed and detected tags are emphasized or a polygon is drawn around a detected tag in the viewfinder mode of the camera application. Alternatively or additionally, the device further comprises a memory and the peer group management application is arranged to locate a images of visual tags or a video file containing a sequence of images which was previously acquired by the camera and is stored in the memory.

We also propose a electronic processing device comprising a display means capable of displaying a visual tag and processing circuitry comprising a peer group master application arranged to generate a sequence of visual tags comprising encrypted data providing an identifier for a peer-to-peer application, a peer group management operation to be carried out and the identity of at least one peer within the peer group, and further arranged to display at least one visual tag on the display means.

Any range or device value given herein may be extended or altered without losing the effect sought, as will be apparent to the skilled person.

The steps of the methods described herein may be carried out in any suitable order, or simultaneously where appropriate.

It will be understood that the above description of a preferred embodiment is given by way of example only and that various modifications may be made by those skilled in the art.

In particular, it may be that a candidate node 104 has characteristics of both the group ready candidate node 104a and the basic candidate node 104b described above. The peer group management application 312 may be downloaded from a member node 102 or multiple member nodes rather than from a server 106. The visual tag 400 may be displayed on another device, for example on the screen of a device which is not a member node 102, or by projection by an electronic device onto a surface. In some of the described embodiments, all the member nodes 102 comprise a camera. However, it may be that some nodes join the group 100 using means other than image capture of a visual tag 400, for example using prior art mechanisms. Further, it may be that devices are used in combination. For example, a camera phone could be used in conjunction with a computer to allow the computer to join the group.

## Claims

1. A method of enabling a communications device having a camera to join a group of communications devices, members of that group requiring to share information with one another, the method comprising, at the communications device requiring to join the group:
(i) initiating a camera application controlling the camera; and
(ii) acquiring at least one image containing a visual tag comprising a visual representation of information about the group using the camera, decoding the visual tag in order to obtain the information about the group, and wherein the information about the group comprises connectivity data relating to a selected communication device in the group and allowing a connection to be made thereto.

2. A method as claimed in any preceding claim which further comprises:
(i) storing the image at the communications device; and
(ii) initiating a software application at the communications device in order to identify, extract and use the group information in the stored images.

3. A method as claimed in any preceding claim wherein the group information comprises one or more of: an identifier of a peer-to-peer application, a management operation, identifiers of one or more group members and an identifier for an error correction and detection algorithm.

4. A method as claimed in any preceding claim wherein the acquired image is received by the camera from any of: a projector display; and a display of another communications device in the group.

5. A method as claimed in any of claims 1, 3 or 4 wherein the method further comprises obtaining an identifier of a peer-to-peer or computer supported cooperative work application from the group information and automatically downloading the identified peer-to-peer or computer supported cooperative work application from another entity or group of entities.

6. A method of enabling a communications device having a camera to create a group of communications devices, members of that group requiring to share information with one another, the method comprising, at a communications device which is already a member of the group:
(i) accessing at least one visual tag comprising information about the group;
(ii) displaying the visual tag.

7. A method as claimed in claim 6 wherein the information about the group is encrypted in the visual tag(s).

8. A method as claimed in claim 6 or claim 7 wherein the step of accessing the visual tag comprises generating the visual tag.

9. A method as claimed in claim 8 wherein the step of generating the visual tag comprises encrypting the group information.

10. A communications device (104a, 104b) for joining a group of communications devices (100), members of that group requiring to share information with one another, the communications device comprising:
(i) a camera (304) and a camera application (310) arranged to control the camera;
(ii) means (312, 314) for identifying and extracting information about the group from a visual tag (400) in an image acquired using the camera and decoding the visual tag in order to obtain the information about the group, wherein the information about the group comprises connectivity data relating to a selected said communication device in the group and allowing a connection to be made thereto; and
(iii) a software application arranged to use the group information.

11. A communications device as claimed in claim 10 wherein the means for identifying and extracting comprises a plug-in to the camera application.

12. A communications device as claimed in claim 10 wherein the means for identifying and extracting is integral with the software application which is a peer-to-peer or computer supported cooperative work application.

13. A communications device (102) comprising:
(i) means (214) for automatically generating at least one visual tag, comprising information about a group of communications devices, members of that group requiring to share information with one another using a software application, wherein the information about the group comprises connectivity data relating to a selected said communication device in the group and allowing a connection to be made thereto; and
(ii) means (202) for displaying the visual tag.

14. A communications device as claimed in claim 13 wherein the information about the group comprises any of: an identifier of the software application, a management operation, and identifiers of one or more group members.

## Patentansprüche

1. Verfahren, um es einer Kommunikationsvorrichtung, die eine Kamera hat, zu erlauben, sich einer Gruppe von Kommunikationsvorrichtungen anzuschließen, wobei Mitglieder dieser Gruppe fordern, Informationen miteinander zu teilen, wobei das Verfahren an den Kommunikationsvorrichtungen, die fordern, sich der Gruppe anzuschließen, Folgendes umfasst:
(i) Initiieren der Kameraanwendung, die die Kamera steuert, und
(ii) Erfassen mindestens eines Bilds, das ein visuelles Tag enthält, das eine visuelle Darstellung von Informationen über die Gruppe, die die Kamera verwendet, umfasst, Dekodieren des visuellen Tags, um die Informationen über die Gruppe Konnektivitätsdaten in Zusammenhang mit einer ausgewählten Kommunikationsvorrichtung in der Gruppe umfassen und ein Verbinden mit ihr erlauben.

2. Verfahren nach einem der vorhergehenden Ansprüche, das ferner Folgendes umfasst:
(i) Speichern des Bilds an der Kommunikationsvorrichtung, und
(ii) Initiieren einer Softwareanwendung an der Kommunikationsvorrichtung, um die Gruppeninformationen in den gespeicherten Bildern zu identifizieren, extrahieren und zu verwenden.

3. Verfahren nach einem der vorhergehenden Ansprüche, wobei die Gruppeninformationen eine oder mehrere der folgenden umfassen: einen Identifikator einer Peer-zu-Peer-Anwendung, einen Managementvorgang, Identifikatoren eines oder mehrerer Gruppenmitglieder und einen Identifikator für einen Fehlerkorrektur- und Erfassungsalgorithmus.

4. Verfahren nach einem der vorhergehenden Ansprüche, wobei das erfasste Bild von der Kamera von irgendeinem der folgenden empfangen wird: ein Projektordisplay, ein Display einer anderen Kommunikationsvorrichtung in der Gruppe.

5. Verfahren nach einem der Ansprüche 1, 3 oder 4, wobei das Verfahren ferner das Erhalten eines Identifikators einer Peer-zu-Peer- oder computergestützten kooperativen Arbeitsanwendung von den Gruppeninformationen und das automatische Downloaden der identifizierten Peer-zu-Peer- oder computergestützten kooperativen Arbeitsanwendung von einer anderen Entität oder Gruppe von Entitäten umfasst.

6. Verfahren zum Ermöglichen, dass eine Kommunikationsvorrichtung, die eine Kamera hat, eine Gruppe von Kommunikationsvorrichtungen anlegt, wobei Mitglieder dieser Gruppe fordern, Informationen miteinander zu teilen, wobei das Verfahren an einer Kommunikationsvorrichtung, die bereits Mitglied der Gruppe ist, Folgendes umfasst:
(i) Zugreifen auf mindestens ein visuelles Tag, das Informationen über die Gruppe umfasst,
(ii) Anzeigen des visuellen Tags.

7. Verfahren nach Anspruch 6, wobei die Informationen über die Gruppe in dem/den visuellen Tag (s) verschlüsselt sind.

8. Verfahren nach Anspruch 6 oder 7, wobei der Schritt des Zugreifens auf den visuellen Tag das Erzeugen des visuellen Tags umfasst.

9. Verfahren nach Anspruch 8, wobei der Schritt des Erzeugens des visuellen Tags das Verschlüsseln der Gruppeninformationen umfasst.

10. Kommunikationsvorrichtung (104a, 104b), um sich einer Gruppe von Kommunikationsvorrichtungen (100) anzuschließen, wobei Mitglieder dieser Gruppe fordern, Informationen miteinander zu teilen, wobei die Kommunikationsvorrichtung Folgendes umfasst:
(i) eine Kamera (304) und eine Kameraanwendung (310), die eingerichtet sind, um die Kamera zu steuern,
(ii) Mittel (312, 314) zum Identifizieren und Extrahieren von Informationen über die Gruppe von einem visuellen Tag (400) in einem Bild, das erfasst wird, unter Verwenden der Kamera, und Dekodieren des visuellen Tags, um Informationen über die Gruppe zu erhalten, wobei die Informationen über die Gruppe Konnektivitätsdaten in Zusammenhang mit einer ausgewählten Kommunikationsvorrichtung in der Gruppe umfassen und ein Herstellen der Verbindung mit ihr erlauben, und
(iii) eine Softwareawendung, die eingerichtet ist, um die Gruppeninformation zu verwenden.

11. Kommunikationsvorrichtung nach Anspruch 10, wobei die Mittel zum Identifizieren und Extrahieren eine Plug-in-Anwendung zu der Kamera umfassen.

12. Kommunikationsvorrichtung nach Anspruch 10, wobei die Mittel zum Identifizieren und Extrahieren mit der Softwareanwendung, die eine Peer-zu-Peer- oder computergestützte kooperative Arbeitsanwendung ist, integral sind.

13. Kommunikationsvorrichtung (102), die Folgendes umfasst:
(i) Mittel (214) zum automatischen Erzeugen mindestens eines visuellen Tags, das Informationen über eine Gruppe von Kommunikationsvorrichtungen umfasst, wobei Mitglieder dieser Gruppe fordern, Informationen miteinander zu teilen, indem eine Softwareanwendung verwendet wird, wobei die Informationen über die Gruppe Konnektivitätsdaten in Zusammenhang mit einer ausgewählten Kommunikationsvorrichtung in der Gruppe umfassen und ein Verbinden mit ihr erlauben, und
(ii) Mittel (202) zum Anzeigen des visuellen Tags.

14. Kommunikationsvorrichtung nach Anspruch 13, wobei die Informationen über die Gruppe irgendeine der folgenden umfassen: einen Identifikator der Softwareanwendung, einen Managementvorgang und Identifikatoren eines oder mehrerer Gruppenmitglieder.

## Revendications

1. Procédé permettant à un dispositif de communications ayant une caméra de joindre un groupe de dispositifs de communications, des membres de ce groupe nécessitant de partager des informations les uns avec les autres, le procédé comprenant, au niveau du dispositif de communications nécessitant de joindre le groupe :
(i) l'initiation d'une application de caméra commandant la caméra ; et
(ii) l'acquisition d'au moins une image contenant une étiquette visuelle comprenant une représentation visuelle d'informations sur le groupe en utilisant la caméra, le décodage de l'étiquette visuelle afin d'obtenir les informations sur le groupe, et dans lequel les informations sur le groupe comprennent des données de connectivité concernant un dispositif de communications choisi dans le groupe et permettant d'effectuer une connexion avec celui-ci.

2. Procédé selon l'une quelconque des revendications précédentes, qui comprend en outre :
(i) le stockage de l'image dans le dispositif de communications ; et
(ii) l'initiation d'une application logicielle dans le dispositif de communications afin d'identifier, d'extraire et d'utiliser les informations de groupe dans les images stockées.

3. Procédé selon l'une quelconque des revendications précédentes, dans lequel les informations de groupe comprennent un ou plusieurs : d'un identifiant d'une application point à point, d'une opération de gestion, d'identifiants d'un ou plusieurs membres du groupe et d'un identifiant pour un algorithme de correction et de détection d'erreur.

4. Procédé selon l'une quelconque des revendications précédentes, dans lequel l'image acquise est reçue par la caméra en provenance de l'un quelconque : d'un affichage de projecteur ; et d'un affichage d'un autre dispositif de communications du groupe.

5. Procédé selon l'une quelconque des revendications 1, 3 ou 4, dans lequel le procédé comprend en outre l'obtention d'un identifiant d'une application de travail coopératif point à point ou assistée par ordinateur à partir des informations de groupe et le téléchargement automatique de l'application de travail coopératif point à point ou assistée par ordinateur identifiée à partir d'une autre entité ou d'un autre groupe d'entités.

6. Procédé permettant à un dispositif de communications ayant une caméra de créer un groupe de dispositifs de communications, des membres de ce groupe nécessitant de partager des informations les uns avec les autres, le procédé comprenant, dans un dispositif de communications qui est déjà un membre du groupe :
(i) un accès à au moins une étiquette visuelle comprenant des informations sur le groupe ;
(ii) un affichage de l'étiquette visuelle.

7. Procédé selon la revendication 6, dans lequel les informations sur le groupe sont cryptées dans la ou les étiquettes visuelles.

8. Procédé selon la revendication 6 ou la revendication 7, dans lequel l'étape d'accès à l'étiquette visuelle comprend la génération de l'étiquette visuelle.

9. Procédé selon la revendication 8, dans lequel l'étape de génération de l'étiquette visuelle comprend le cryptage des informations de groupe.

10. Dispositif de communications (104a, 104b) pour joindre un groupe de dispositifs de communications (100), des membres de ce groupe nécessitant de partager des informations les uns avec les autres, le dispositif de communications comprenant :
(i) une caméra (304) et une application de caméra (310) agencée pour commander la caméra ;
(ii) des moyens (312, 314) pour identifier et extraire des informations sur le groupe à partir d'une étiquette visuelle (400) dans une image acquise en utilisant la caméra et en décodant l'étiquette visuelle afin d'obtenir les informations sur le groupe, dans lequel les informations sur le groupe comprennent des données de connectivité se rapportant à un dit dispositif de communications choisi dans le groupe et permettant d'établir une connexion avec celui-ci ; et
(iii) une application logicielle agencée pour utiliser les informations de groupe.

11. Dispositif de communications selon la revendication 10, dans lequel les moyens d'identification et d'extraction comprennent un plugiciel dans l'application de caméra.

12. Dispositif de communications selon la revendication 10, dans lequel les moyens d'identification et d'extraction font partie intégrante de l'application logicielle qui est une application de travail coopératif point par point ou assistée par ordinateur.

13. Dispositif de communications (102) comprenant :
(i) des moyens (214) pour générer automatiquement au moins une étiquette visuelle, comprenant des informations sur un groupe de dispositifs de communications, des membres de ce groupe nécessitant de partager des informations les uns avec les autres en utilisant une application logicielle, dans lequel les informations sur le groupe comprennent des données de connectivité se rapportant à un dit dispositif de communications choisi dans le groupe et permettant d'effectuer une connexion avec celui-ci ; et
(ii) des moyens (202) pour afficher l'étiquette visuelle.

14. Dispositif de communications selon la revendication 13, dans lequel les informations sur le groupe comprennent l'un(e) quelconque : d'un identifiant de l'application logicielle, d'une opération de gestion, et d'identifiants d'un ou plusieurs membres du groupe.
